# EUROPEAN PATENT SPECIFICATION

(11) **EP 1 314 699 B1**
(45) Date of publication and mention of the grant of the patent: **06.06.2007**
(21) Application number: 01127942.9
(22) Date of filing: 23.11.2001
(51) Int. Cl.: C02F 1/461

(54) **Method for cleaning an electrolyzed water production apparatus**
Verfahren zum Reinigen einer Vorrichtung zur Erzeugung von elektrolysiertem Wasser
Procédé de nettoyage d' un appareil pour la production d'eau electrolysée

(43) Date of publication of application: 28.05.2003
(73) Proprietor: HOSHIZAKI DENKI KABUSHIKI KAISHA, Toyoake-shi, Aichi-ken (JP)
(72) Inventor: Yamaguchi, Hiroki, Peachtree City, Georgia 30269 (US); Kamitani, Yoshinori, Toyoake-shi, Aichi-ken (JP)
(74) Representative: Kramer - Barske - Schmidtchen

(56) References cited:
- US-A- 5 798 028
- US-B1- 6 168 692
- US-B1- 6 174 419
- PATENT ABSTRACTS OF JAPAN vol. 1999, no. 08, 30 June 1999 (1999-06-30) & JP 11 057716 A (HOSHIZAKI ELECTRIC CO LTD), 2 March 1999 (1999-03-02)
- PATENT ABSTRACTS OF JAPAN vol. 018, no. 639 (C-1282), 6 December 1994 (1994-12-06) & JP 06 246269 A (NIPPON INTETSUKU KK), 6 September 1994 (1994-09-06)

## Description

The present invention relates to an electrolyzed water production apparatus.

Disclosed in Japanese Patent Laid-open Publication No. 11-57716 is an electrolyzed water production apparatus of the type which includes a brine preparation device for diluting salt water of high concentration with fresh water such as city service water to prepare diluted brine, an electrolytic cell for electrolyzing the diluted brine supplied from the brine preparation device, and a power source for applying a predetermined voltage to electrodes in electrolysis chambers of the electrolytic cell so that electrolyzed water is produced by electrolysis of the diluted brine.

In operation of the electrolyzed water production apparatus, the electrolytic cell is supplied with the diluted brine from the brine preparation device and is activated by the voltage applied to its electrodes to effect electrolysis of the diluted brine for producing electrolyzed alkaline water and acidic water. When the operation of the production apparatus is stopped, the supply of the diluted brine to the electrolytic cell is blocked, and the supply of the voltage to the electrodes is cut off. In a condition where the production apparatus has stopped, the electrolyzed acidic water remaining in the electrolytic cell and its discharge conduit causes corrosion of metallic parts of the production apparatus, and the electrolyzed alkaline water causes deposition of calcium on the component parts in the production apparatus. To avoid such a problem, it is required to supply the fresh water and to discharge the remaining electrolyzed water thereby to clean the interior of the electrolytic cell during stoppage of the production apparatus.

However, if the supply amount of the fresh water is insufficient, the remaining electrolyzed water may not be discharged from the electrolytic cell. Contrarily, if the fresh water is supplied in excess to fully discharge the remaining electrolyzed water from the electrolytic cell, useless consumption of the fresh water will increase. The present invention was made in taking note of the fact that the decrease of the ion-conductivity during stoppage of the production apparatus is greatly influenced by the voltage supplied to the electrodes during operation of the production apparatus, the water temperature, the conductivity of the electrolyzed water, the distance between the electrodes, the composition of the electrodes, the effective area of the electrodes, etc.

U.S. Patent No. 5,798,028 discloses an electrolytic water production system, in which the electrolysis chambers are allowed to drain when a predetermined time has expired after stopping application of voltage to the electrolysis electrodes.

U.S. Patent No. 6,168,692 discloses an electrolytic water production system, in which the electrolysis cell is allowed to drain when an acid water generating mode terminates.

U.S. Patent No. 6,174,419 discloses an electrolytic water production system, in which the concentration of hypocholorous acid in the strongly acidic liquid output by the system is measured and electrolytic current supplied to the electrolysis electrodes is controlled to obtain a strongly acidic liquid containing hypochlorous acid with a constant concentration.

U.S. Patent No. 5,445,722 discloses an electrolytic water production system, in which a barrier membrane in the electrolysis cell is movable to correlatively vary the capacity of the anode and cathode chambers.

It is an object of the present invention to provide a method for cleaning an electrolyzed water production apparatus, as well as an electrolyzed water production apparatus, in which the electrolyzed water remaining in the electrolytic cell during stoppage of the electrolyzed water production is fully discharged by a minimum amount of fresh water to clean the interior of the electrolytic cell.

This object is achieved by the method of claim 1 and the apparatus of claim 2.

With the fresh water supply means of the present electrolyzed water production apparatus, the interior of the electrolysis chambers of the electrolytic cell and discharge conduits thereof are cleaned by a minimum supply amount of fresh water during stoppage of the production apparatus, irrespective of the electrolysis condition in the electrolytic cell.

For a better understanding of the present invention, and to show how the same may be carried into effect, reference will now be made, by way of example, to the accompanying drawings, in which;
Fig. 1 is a schematic illustration of an electrolyzed water production apparatus in accordance with the present invention;
Fig. 2(a) is a graph showing an electrolysis current in an electrolytic cell after stopping the production apparatus in a condition where the voltage applied to electrodes of the electrolytic cell is low;
Fig. 2(b) is a graph showing an electrolysis current in the electrolytic cell after stopping the production apparatus in a condition where the voltage applied to electrodes of the electrolytic cell is high;
Fig. 3(a) is a graph showing an electrolysis current in the electrolytic cell after stopping the production apparatus in a condition where the temperature in the electrolytic cell is low;
Fig. 3(b) is a graph showing an electrolysis current in the electrolytic cell after stopping the production apparatus in a condition where the temperature in the electrolytic cell is high;
Fig. 4(a) is a graph showing an electrolysis current in the electrolytic cell after stopping the production apparatus in a condition where the conductivity of diluted brine supplied to the electrolytic cell is low; and
Fig. 4(b) is a graph showing an electrolysis current in the electrolytic cell after stopping the production apparatus in a condition where the conductivity of diluted brine supplied to the electrolytic cell is high.

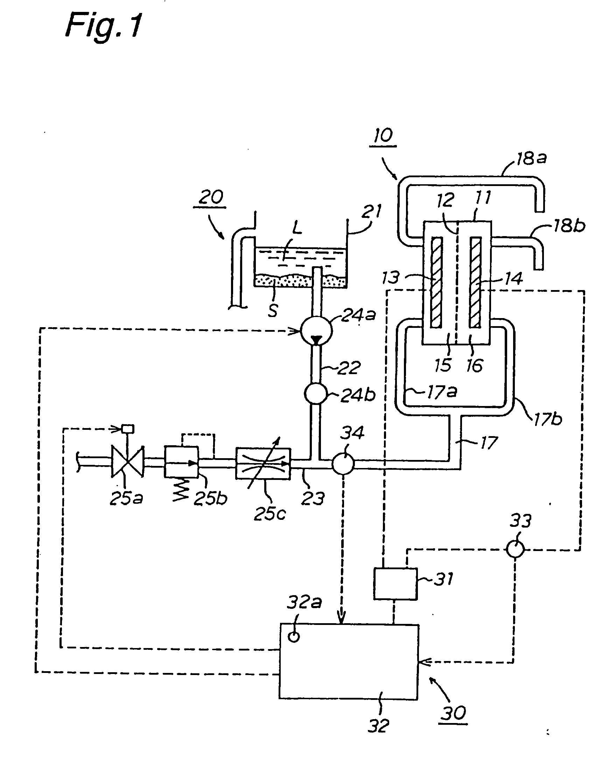

Hereinafter, a preferred embodiment of the present invention will be described with reference to the drawings. Illustrated in Fig. 1 of the drawings is an electrolyzed water production apparatus according to the present invention which includes an electrolysis mechanism 10, a brine preparation mechanism 20 and a control mechanism 30.

The electrolysis mechanism 10 includes an electrolytic cell 11 the interior of which is subdivided into electrolysis chambers 15 and 16 by means of an ion permeable partition membrane 12. The electrolysis chambers 15 and 16 are provided therein with electrodes 13 and 14, respectively. The electrolysis chambers 15 and 16 are connected at their bottom portions to branch conduits 17a and 17b bifurcated from a conduit 17 for supply of diluted brine and at their upper portions to discharge conduits 18a and 18b for discharging electrolyzed water therefrom.

The brine preparation mechanism 20 is provided to supply diluted brine of predetermined concentration into the electrolysis chambers 15 and 16 of the electrolytic cell 11. The brine preparation mechanism 20 is composed of a thick brine storage tank 21, a first supply conduit 22 for supply of thick brine from tank 21, a second supply conduit 23 for supply of fresh water such as city service water, a water pump 24a and a check valve 24b disposed in the first supply conduit 22, and a water supply valve 25a, a pressure control valve 25b and a flow control valve 25c disposed in the second supply conduit 23. The first supply conduit 21 is connected to the second supply conduit 23 downstream of the flow control valve 25c.

The thick brine storage tank 21 is provided to store an amount of saturated brine L prepared by dissolution of salt S supplied therein. The saturated brine L is supplied to the second supply conduit 23 from tank 21 through the check valve 24b in operation of the water pump 24a. On the other hand, the fresh water is supplied to the second supply conduit 23 when the water supply valve 25a is opened. The fresh water supplied from the water supply valve 25a is adjusted in pressure and flow amount under control of the pressure control valve 25b and flow control valve 25c and is uniformly mixed with the saturated brine from the first supply conduit 22 to prepare diluted brine of predetermined concentration. Thus, the diluted brine is supplied into the electrolysis chambers 15 and 16 of the electrolytic cell 11 through the conduits 17 and 17a, 17b.

The control mechanism 30 includes a power source of direct current 31, a controller 32, a current sensor 33 and a flow quantity sensor 34. The power source 31 is in the form of a power source of constant voltage for applying a constant voltage to the electrodes 13 and 14 in the electrolytic cell 11 in operation of the production apparatus. The controller 32 includes an operation switch 32a which is operated by a user for open and close control of the water supply valve 25a, for control of the water pump 24a, for controlling the supply amount of diluted brine in response to a detection signal from the flow quantity sensor 34, and for concentration control of the diluted brine in response to a detection signal from the current sensor 33. The current sensor 33 is provided to detect an electrolysis current in the electrolytic cell during operation of the production apparatus for applying a detection signal indicative of the detected electrolysis current to the controller 32. In response to the detection signal from the current sensor 33, the controller 32 controls the operation of water supply pump 24a to adjust the discharge amount of saturated brine thereby to adjust the concentration of the diluted brine and maintain the property of diluted brine at a predetermined value.

In operation of the electrolyzed water production apparatus, the diluted brine is supplied into the electrolysis chambers 15 and 16 of electrolytic cell 11 under control of the controller 32 so that electrolyzed acidic water is produced in one of the electrolysis chambers 15 and 16 while electrolyzed alkaline water is produced in the other electrolysis chamber. The electrolyzed acidic water and alkaline water are discharged from the discharge conduits 18a, 18b for use in an appropriate place. During such operation of the production apparatus, the concentration of the diluted brine is adjusted under control of the controller 32 in accordance with variation of the electrolysis current detected by the current sensor 33 to maintain the property of the electrolyzed water at the predetermined value.

When the operation switch 32a is operated to stop the operation of the production apparatus, the controller 32 acts to cut off the supply of voltage to the electrodes 13, 14 from the power source 31, to stop the operation of water pump 24a and to close the water supply valve 25a for blocking the supply of the diluted brine to the electrolytic cell 11. In such an instance, the controller 32 acts in response to the detection signal indicative of the electrolysis current from the current sensor 33 to open the water supply valve 25a for a predetermined time after the electrolysis current has decreased to a predetermined low value thereby to supply only the fresh water into the electrolysis chambers 15 and 16 of electrolytic cell 11 for cleaning each interior of the electrolysis chambers 15 and 16 during stoppage of the production apparatus.

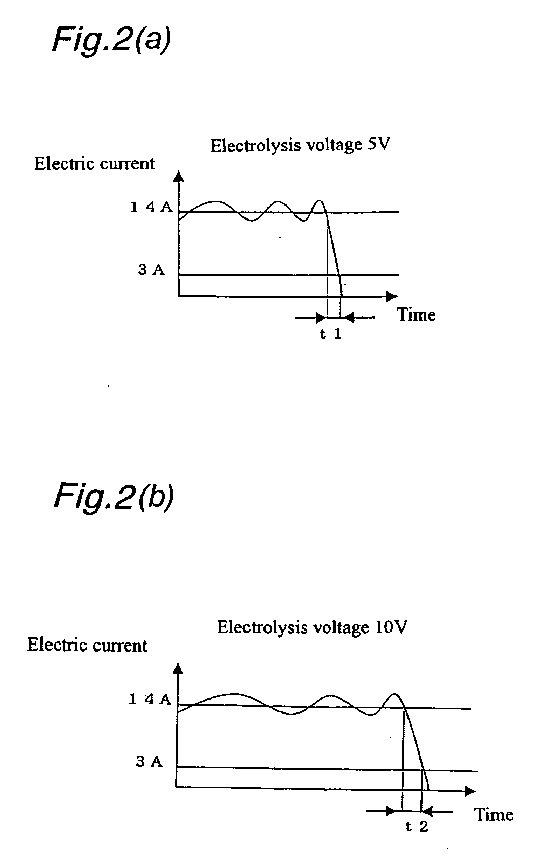

As the electrolysis current in electrolytic cell 11 represents a condition of ion-reaction of the electrolyzed water remaining in electrolysis chambers 15 and 16, the remaining amount of the electrolyzed water in electrolysis chambers 15 and 16 can be detected by detection of the electrolysis current. When the production apparatus is stopped, the electrolysis current rapidly decreases upon lapse of time as further discussed below with respect to Figs. 2-4. Thus, the fresh water is supplied into the electrolysis chambers 15, 16 of electrolytic cell 11 when the rapid decrease of the electrolysis current has been detected by the current sensor 33, and the amount of the fresh water used for cleaning the interior of the electrolytic cell 1 can thus be minimized. In this embodiment, the controller 32 is programmed to open the water supply valve 25a for a predetermined time when the decrease of the electrolysis current to 3A has been detected by the current sensor 33.

In the electrolyzed water production apparatus, the electrolysis current in the electrolytic cell 11 is fluctuated in accordance with an electrolysis condition such as the applied voltage to the electrodes 13, 14 during operation of the production apparatus, the water temperature, the conductivity of the diluted brine, the supply amount of diluted brine into the electrolytic cell, the distance between the electrodes 13 and 14, the composition of electrodes 13, 14, the effective electrolysis area of electrodes 13, 14, etc.

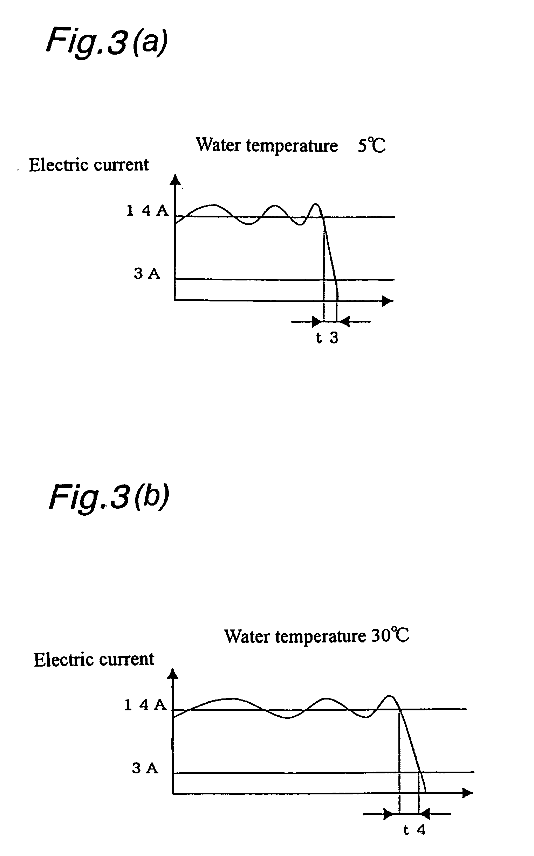

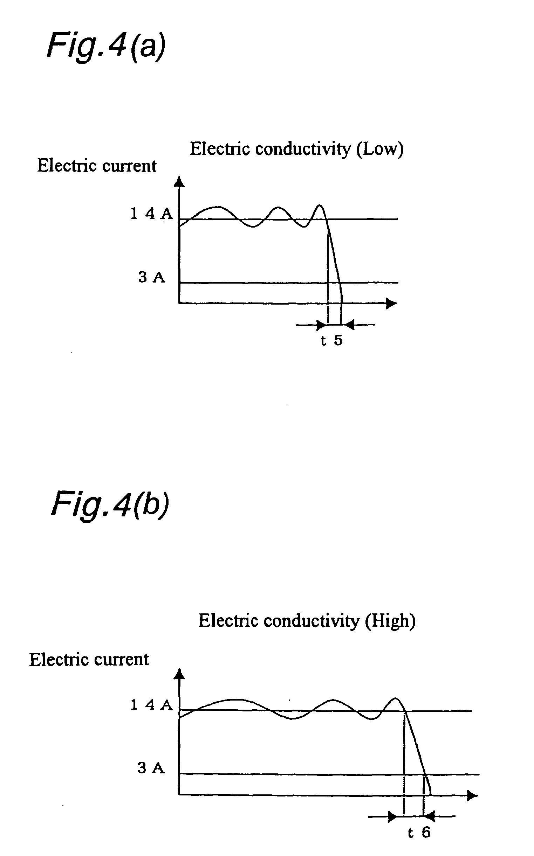

Illustrated in Figs. 2(a), 2(b) to 4(a), 4(b) are variations of the electrolysis current in the electrolytic cell 11 under different electrolysis conditions. When the applied voltage to the electrodes 13, 14 is 5V as shown in Fig. 2(a), the electrolysis current in the electrolytic cell 11 decreases from 14A to 3A upon lapse of a time t1. When the applied voltage to the electrodes 13, 14 is 10V as shown in Fig. 2(b), the electrolysis current in the electrolytic cell 11 decreases from 14A to 3A upon lapse of a time t2 longer than the time t1. When the temperature of the water remaining in the electrolysis chambers 13, 14 is 5°C as shown in Fig. 3(a), the electrolysis current in the electrolytic cell 11 decreases from 14A to 3A upon lapse of a time t3. When the temperature of the remaining water is 30°C as shown in Fig. 3(b), the electrolysis current decreases from 14A to 3A upon lapse of a time t4 longer than the time t3. When the conductivity of the diluted brine is low as shown in Fig 4(a), the electrolysis current in the electrolytic cell 11 decreases from 14 to 3A upon lapse of a time t5. When the conductivity of the diluted brine is high as shown in Fig. 4(b), the electrolysis current decreases from 14A to 3A upon lapse of a time t6 longer than the time t5.

For these reasons, the controller 32 in the electrolyzed water production apparatus is programmed to supply the fresh water into the electrolysis chambers 13, 14 of the electrolytic cell 11 for a predetermined time after it has been detected by the current sensor 33 that the electrolysis current decreased to the predetermined low value (for instance, 3A) after stopping of the production apparatus. Under such control of the controller 32, the interior of the electrolysis chambers 13, 14 of the electrolytic cell 11 and discharge conduits 18a, 18b thereof are cleaned by a minimum supply amount of fresh water, irrespective of the electrolysis condition in the electrolytic cell 11 described above.

## Claims

1. A method for cleaning an electrolyzed water production apparatus comprising:
a brine preparation device (20) adapted to dilute high concentration brine with fresh water to prepare a diluted brine having a predetermined concentration,
an electrolytic cell (11) having electrodes (13, 14) disposed in respective electrolysis chambers (15, 16), the electrolytic cell being adapted to electrolyze the diluted brine supplied from the brine preparation device,
a power source (31) adapted to apply a predetermined voltage to the electrodes in the electrolysis chambers of the electrolytic cell to produce electrolyzed water by electrolysis of the diluted brine,
a current sensor (33) for detecting an electrolysis current value in the electrolysis chambers of the electrolytic cell, wherein the current sensor is adapted to generate a detection signal indicative of the electrolysis current value in the electrolysis chambers,
fresh water supply means (23, 25a, 25b, 25c) for supplying fresh water into the electrolysis chambers of the electrolytic cell, and
a controller (32) programmed and arranged to cause the fresh water supply means to supply the fresh water into the electrolysis chambers,
the method comprising:
applying the predetermined voltage to the electrodes so that electrolyzed water is produced by electrolysis of the diluted brine,
interrupting the supply of the predetermined voltage to the electrodes to stop the electrolysis operation of the production apparatus, and
determining when the detection signal from the current sensor has decreased to a predetermined value while the supply of the predetermined voltage to the electrodes has been interrupted to stop the electrolysis operation of the production apparatus,
**characterized by**:
supplying the fresh water into the electrolysis chambers (15, 16) for a predetermined time after it is determined that the electrolysis current value detected by the current sensor (33) in the electrolysis chambers, in the condition where the supply of the predetermined voltage to the electrodes (13, 14) has been interrupted to stop the electrolysis operation of the production apparatus, has decreased to the predetermined value, the fresh water being supplied into the electrolysis chambers for cleaning the interior of the electrolytic cell (11).

2. An electrolyzed water production apparatus comprising:
a brine preparation device (20) adapted to dilute high concentration brine with fresh water to prepare a diluted brine having a predetermined concentration,
an electrolytic cell (11) having electrodes (13, 14) disposed in respective electrolysis chambers (15, 16), the electrolytic cell being adapted to electrolyze the diluted brine supplied from the brine preparation device,
a power source (31) adapted to apply a predetermined voltage to the electrodes in the electrolysis chambers of the electrolytic cell to produce electrolyzed water by electrolysis of the diluted brine,
current sensor (33) for detecting the electrolysis current value in the electrolysis chambers of the electrolytic cell, wherein the current sensor is adapted to generate a detection signal indicative of the electrolysis current value in the electrolysis chambers, and
fresh water supply means (23, 25a, 25b, 25c) for supplying fresh water into the electrolysis chambers of the electrolytic cell,
**characterized by:**
a controller (32) programmed and specifically adapted to perform all method steps of claim 1.

## Patentansprüche

1. Verfahren zum Reinigen einer Vorrichtung zur Erzeugung von elektrolysiertem Wasser, enthaltend:
eine Laugenerzeugungseinrichtung (20), die dazu angepasst ist, hochkonzentrierte Lauge mit frischem Wasser zu verdünnen zum Erzeugen einer verdünnten Lauge, die eine vorbestimmte Konzentration aufweist,
eine elektrolytische Zelle (11), die Elektroden (13, 14) aufweist, die in der jeweiligen Elektrolysekammer (15, 16) angebracht sind, wobei die elektrolytische Zelle angepasst ist, die verdünnte Lauge, die von der Laugenerzeugungseinrichtung zugeführt wird, zur elektrolysieren,
eine Stromquelle (31), die angepasst ist, eine vorbestimmte Spannung an die Elektroden in der Elektrolysekammer der elektrolytischen Zelle anzulegen, zum Erzeugen von elektrolysiertem Wasser durch Elektrolyse der verdünnten Lauge,
einen Stromsensor (33) zum Erfassen eines Elektrolysestromwerts in den Elektrolysekammern der elektrolytischen Zelle, wobei der Stromsensor angepasst ist, ein Erfassungssignal zu erzeugen, das eine Anzeige für den Elektrolysestromwert in den Elektrolysekammern ist,
ein Frischwasserzufuhrmittel (23, 25a, 25b, 25c) zum Zuführen von Frischwasser in die Elektrolysekammern der elektrolytischen Zelle, und
eine Steuerung (32), die programmiert und angeordnet ist zu bewirken, dass das Frischwasserzufuhrmittel das Frischwasser in die Elektrolysekammern zuführt,
wobei das Verfahren enthält:
Anlegen der vorbestimmten Spannung an die Elektroden, so dass elektrolysiertes Wasser durch Elektrolyse der verdünnten Lauge erzeugt wird,
Unterbrechen der Zufuhr der vorbestimmten Spannung an die Elektroden zum Stoppen des Elektrolysevorgangs der Erzeugungsvorrichtung, und
Bestimmen, wann das Erfassungssignal von dem Stromsensor auf einen vorbestimmten Wert abgefallen ist, während die Zufuhr der vorbestimmten Spannung an die Elektroden zum Stoppen des Elektrolysevorgangs der Erzeugungsvorrichtung unterbrochen ist,
**gekennzeichnet durch**:
Zuführen des Frischwassers in die Elektrolysekammern (15, 16) während einer vorbestimmten Zeit nachdem bestimmt ist, dass der Elektrolysestromwert, der **durch** den Stromsensor (33) in den Elektrolysekammern erfasst wird, in dem Zustand, in dem die Zufuhr der vorbestimmten Spannung an die Elektroden (13, 14) unterbrochen ist zum Stoppen des Elektrolysevorgangs der Erzeugungsvorrichtung, auf den vorbestimmten Wert abgefallen ist, wobei das Frischwasser in die Elektrolysekammern zum Reinigen des Inneren der elektrolytischen Zelle (11) zugeführt wird.

2. Erzeugungsvorrichtung für elektrolysiertes Wasser, enthaltend:
eine Laugenerzeugungseinrichtung (20), die angepasst ist, eine hochkonzentrierte Lauge mit Frischwasser zu verdünnen zum Erzeugen einer verdünnten Lauge, die eine vorbestimmte Konzentration aufweist,
eine elektrolytische Zelle (11), die Elektroden (13, 14) aufweist, die in jeweiligen Elektrolysekammern (15, 16) angebracht sind, wobei die elektrolytische Zelle angepasst ist, die verdünnte Lauge zu elektrolysieren, die von der Laugenerzeugungseinrichtung zugeführt wird,
eine Stromquelle (31), die angepasst ist, eine vorbestimmte Spannung an die Elektroden in den Elektrolysekammern der elektrolytischen Zelle zum Erzeugen von elektrolysiertem Wasser durch Elektrolyse der verdünnten Lauge anzulegen,
einen Stromsensor (33) zum Erfassen des Elektrolysestromwerts in den Elektrolysekammern der elektrolytischen Zelle, wobei der Stromsensor angepasst ist, ein Erfassungssignal zu erzeugen, das eine Anzeige für den Elektrolysestromwert in den Elektrolysekammern ist, und
ein Frischwasserzufuhrmittel (23, 25a, 25b, 25c) zum Zuführen von Frischwasser in die Elektrolysekammern der elektrolytischen Zelle,
**gekennzeichnet durch**
eine Steuerung (32), die programmiert und speziell angepasst ist, alle Verfahrensschritte von Anspruch 1 auszuführen.

## Revendications

1. Procédé de nettoyage d'un appareil de production d'eau électrolysée comprenant:
- un dispositif de préparation de saumure (20) adapté pour diluer une saumure de concentration élevée avec de l'eau douce pour préparer une saumure diluée ayant une concentration prédéterminée,
- une cellule électrolytique (11) ayant des électrodes (13, 14) disposées dans des chambres d'électrolyse respectives (15, 16), la cellule électrolytique étant adaptée pour électrolyser la saumure diluée délivrée par le dispositif de préparation de saumure,
- une unité d'alimentation (31) adaptée pour appliquer une tension prédéterminée aux électrodes dans les chambres d'électrolyse de la cellule électrolytique pour produire de l'eau électrolysée par électrolyse de la saumure diluée,
- un capteur de courant (33) destiné à capter une valeur de courant d'électrolyse dans les chambres d'électrolyse de la cellule électrolytique, dans lequel le capteur de courant est adapté pour générer un signal de détection indicatif de la valeur de courant d'électrolyse dans les chambres d'électrolyse,
- des moyens d'alimentation en eau douce (23, 25a, 25b, 25c) destinés à délivrer de l'eau douce dans les chambres d'électrolyse de la cellule électrolytique, et
- une unité de commande (32) programmée et agencée pour faire en sorte que les moyens d'alimentation en eau douce délivrent l'eau douce dans les chambres d'électrolyse,
le procédé comprenant les étapes consistant à:
- appliquer la tension prédéterminée aux électrodes de sorte que de l'eau électrolysée soit produite par électrolyse de la saumure diluée,
- interrompre l'alimentation de la tension prédéterminée aux électrodes pour arrêter l'opération d'électrolyse de l'appareil de production, et
- déterminer lorsque le signal de détection provenant du capteur de courant a diminué à une valeur prédéterminée tandis que l'alimentation de la tension prédéterminée aux électrodes a été interrompue pour arrêter l'opération d'électrolyse de l'appareil de production,
et étant **caractérisé en ce qu'**il comporte une étape consistant à:délivrer l'eau douce dans les chambres d'électrolyse (15, 16) pendant une durée prédéterminée après que l'on ait constaté que la valeur de courant d'électrolyse, détectée par le capteur de courant (33) dans les chambres d'électrolyse a diminué à la valeur prédéterminée lorsque l'alimentation de la tension prédéterminée aux électrodes (13, 14) a été interrompue pour arrêter l'opération d'électrolyse de l'appareil de production, l'eau douce étant délivrée dans les chambres d'électrolyse pour nettoyer l'intérieur de la cellule électrolytique (11).

2. Appareil de production d'eau électrolysée comprenant:
- un dispositif de préparation de saumure (20) adapté pour diluer une saumure de concentration élevée avec de l'eau douce pour préparer une saumure diluée ayant une concentration prédéterminée,
- une cellule électrolytique (11) ayant des électrodes (13, 14) disposées dans des chambres d'électrolyse respectives (15, 16), la cellule électrolytique étant adaptée pour électrolyser la saumure diluée délivrée par le dispositif de préparation de saumure,
- une unité d'alimentation (31) adaptée pour appliquer une tension prédéterminée aux électrodes dans les chambres d'électrolyse de la cellule électrolytique pour produire de l'eau électrolysée par électrolyse de la saumure diluée,
- un capteur de courant (33) destiné à capter une valeur de courant d'électrolyse dans les chambres d'électrolyse de la cellule électrolytique, dans lequel le capteur de courant est adapté pour générer un signal de détection indicatif de la valeur de courant d'électrolyse dans les chambres d'électrolyse, et
- des moyens d'alimentation en eau douce (23, 25a, 25b, 25c) destinés à délivrer de l'eau douce dans les chambres d'électrolyse de la cellule électrolytique,
**caractérisé en ce qu'**il comporte une unité de commande (32) programmée et précisément adaptée pour effectuer toutes les étapes de procédé de la revendication 1.
